# FASCICULE DE BREVET EUROPEEN

(11) **EP 1 152 967 B1**
(45) Date de publication et mention de la délivrance du brevet: **07.04.2004**
(21) Numéro de dépôt: 99900971.5
(22) Date de dépôt: 20.01.1999
(51) Int. Cl.: B65G 69/04

(54) **DISPOSITIF DE DISPERSION D'UN MATERIAU SOLIDE DIVISE A L'INTERIEUR D'UN RECIPIENT**
VORRICHTUNG ZUM DISPERGIEREN VON SCHÜTTGUT IM INNENRAUM EINES BEHÄLTERS
DEVICE FOR DISPERSING A DIVIDED SOLID MATERIAL INSIDE A RECEPTACLE

(43) Date de publication de la demande: 14.11.2001
(73) Titulaire: TotalFinaElf France, 92800 Puteaux (FR); PETROVAL S.A., 76430 Saint-Romain de Colbosc (FR)
(72) Inventeur: Blasco, Jean-Michel, 13220 Châteauneuf les Martigues (FR)
(74) Mandataire: Jolly, Jean-Pierre
(86) Numéro de dépôt international: PCT/FR1999/000113
(87) Numéro de publication internationale: WO 2000/043304

(56) Documents cités:
- AT-B- 331 714
- FR-A- 2 766 386
- US-A- 4 397 423

## Description

La présente invention concerne un dispositif de dispersion d'un matériau solide divisé, notamment sous forme de granules ou de bâtonnets, à l'intérieur d'un récipient tel qu'une cuve.

L'invention trouve une application particulièrement intéressante dans l'industrie pétrochimique, pour le remplissage de réacteurs avec du matériau catalyseur, mais pourrait être employée pour le remplissage de tout type de récipient, avec tout type de matériau solide divisé, dès lors que le lit de matériau déposé dans ce récipient doit être plat, homogène et/ou dense, et que le remplissage doit être réalisé avec une émission limitée de poussière. L'invention serait ainsi, par exemple, utilisable pour le remplissage de silos à grain.

Dans le domaine de l'industrie pétrochimique, il est courant de traiter des fluides par passage de ces fluides au travers d'un lit de matériau catalyseur. Ce matériau catalyseur se présente sous forme de bâtonnets de quelques millimètres de longueur et est placé dans la cuve du réacteur, généralement de forme cylindrique.

Une méthode de chargement d'un tel réacteur consiste à déverser purement et simplement le matériau catalyseur dans la cuve. Ce matériau a toutefois pour inconvénient de se déposer sous forme d'un tas plus ou moins conique, dont le tassement est beaucoup plus important dans la partie centrale que dans les parties périphériques. Il en résulte que le fluide à traiter tend à passer préférentiellement au travers des couches de moindre épaisseur et de plus faible densité, ce qui diminue notablement le rendement du réacteur.

De plus, le matériau catalyseur est fréquemment à base d'alumine, et est donc friable et cassant. Les bâtonnets qui le composent se cassent plus ou moins lors de leur déversement, ce qui amoindrit l'efficacité du traitement et conduit à une perte importante de matériau par émission de poussière.

En outre, la quantité de matériau pouvant être placée dans le réacteur est diminuée.

Une autre technique de remplissage consiste à prévoir, à la sortie du conduit d'introduction du matériau dans la cuve, une tête de dispersion comprenant des plateaux ou des pales entraînés en rotation, qui cassent le flux de matériau.

Ce genre de tête améliore la répartition du produit dans la cuve, sans toutefois permettre d'obtenir un lit de matériau parfaitement homogène. En effet, la dispersion se fait selon des trajectoires très aléatoires, et les bâtonnets rencontrent fréquemment la paroi périphérique de la cuve avant d'atteindre le fond de cette cuve, et ont donc tendance à s'accumuler préférentiellement à la base de cette paroi. Il en résulte que la face supérieure du lit obtenu a plus ou moins la forme d'une cuvette conique, créant également des passages préférentiels pour le fluide à traiter.

En outre, les bâtonnets subissent des chocs contre les plateaux ou les pales, ce qui provoque leur détérioration et l'émission d'une poussière abondante.

Certains problèmes du réglage du débit d'écoulement du matériau se posent, et la densité du lit obtenu n'est pas très élevée.

La présente invention vise à remédier à l'ensemble de ces inconvénients, en fournissant un dispositif de dispersion permettant de déposer le matériau sous forme d'un lit plat, homogène, à densité élevée, sans risque de détérioration des granules ou bâtonnets constituant ce matériau, et avec une émission de poussière limitée.

Le dispositif qu'elle concerne comprend, de manière connue en soi, un organe entraîné en rotation autour d'un axe vertical, placé à la sortie du conduit d'introduction du matériau solide divisé dans le récipient.

Selon l'invention, cet organe comprend deux conduits de dispersion du matériau, présentant chacun une forme courbe et une ouverture d'écoulement du matériau dans le récipient ; ces conduits sont courbés autour d'un même axe perpendiculaire à l'axe de rotation dudit organe de dispersion mais de manière opposée l'un par rapport à l'autre, et sont conformés de telle sorte que leurs ouvertures d'écoulement sont situées chacune d'un côté de l'axe de rotation dudit organe de dispersion, sensiblement dans un même plan diamétral, et sont orientées selon des directions opposées ; chacun de ces conduits comprend en outre au moins une cloison longitudinale s'étendant sur l'ensemble ou sur une large partie de sa longueur, cette cloison étant propre à diviser le flux de matériau et à répartir l'écoulement de celui-ci, à l'encontre de la force centrifuge, sur l'ensemble ou sur une large partie de l'ouverture d'écoulement.

Ces conduits, par leur forme courbe précitée, éliminent tout choc du matériau lors de son écoulement et permettent, lorsque l'organe est entraîné en rotation, une projection du matériau selon deux flux hélicoïdaux de direction opposée, dont la largeur correspond sensiblement au rayon du récipient à remplir. La vitesse de rotation de l'organe de dispersion peut être réglée, en fonction du type de matériau, de la vitesse d'écoulement de celui-ci et de la distance séparant cet organe et le fond du récipient ou la surface du matériau, de telle sorte que les granules ou les bâtonnets situés à l'extérieur de ces flux tombent sensiblement à la base de la paroi latérale du récipient.

Un lit de matériau sensiblement plat et à tassement homogène est ainsi obtenu, sans détérioration des granules ou bâtonnets, ni émission de poussières.

La section des conduits peut être relativement réduite de telle sorte que les deux flux hélicoïdaux répandent, à chaque rotation dudit organe, une quantité relativement limitée de matériau, et la vitesse de rotation dudit organe peut, en contrepartie, être relativement élevée. Un lit de densité très élevée est ainsi obtenu, sans pour autant affecter la rapidité de remplissage du récipient compte tenu de ladite vitesse de rotation.

De préférence, l'entraxe entre deux cloisons adjacentes augmente depuis la partie de chaque ouverture située du côté de l'axe de rotation de l'organe de dispersion vers la partie de cette même ouverture située du côté opposé. Ce positionnement des cloisons permet une meilleure répartition du matériau au sein du flux émis par le conduit.

Selon une forme de réalisation préférée de l'invention, chaque conduit présente une forme sensiblement en demi-spire d'hélicoïde. Cette forme particulière s'avère donner d'excellents résultats.

Avantageusement, l'organe de dispersion comprend des moyens accessoires permettant de réguler l'écoulement du matériau, tels que des plaquettes réglables en position, situées au niveau des conduits de manière à augmenter ou à diminuer la section de ces conduits, ou situées en regard des ouvertures de ces conduits. Les plaquettes situées en regard des ouvertures des conduits peuvent comporter des bords inclinés propres à légèrement dévier le flux de manière adéquate dans le plan vertical, si nécessaire.

De préférence, le dispositif selon l'invention comprend un système d'aspiration des poussières du matériau solide divisé, agissant à l'intérieur du récipient à remplir et/ou à l'intérieur du dispositif lui-même.

Pour sa bonne compréhension, l'invention est à nouveau décrite ci-dessous en référence au dessin schématique annexé représentant, à titre d'exemple non limitatif, une forme de réalisation préférée du dispositif de dispersion qu'elle concerne.
La figure 1 est une vue partielle simplifiée, en coupe longitudinale, d'un réacteur utilisable dans le domaine de l'industrie pétrochimique ;
la figure 2 est une vue en coupe longitudinale du dispositif selon l'invention ;
la figure 3 est une vue en perspective de l'organe de dispersion que comprend ce dispositif, et
la figure 4 est une vue de cet organe en coupe selon la ligne IV-IV de la figure 2.

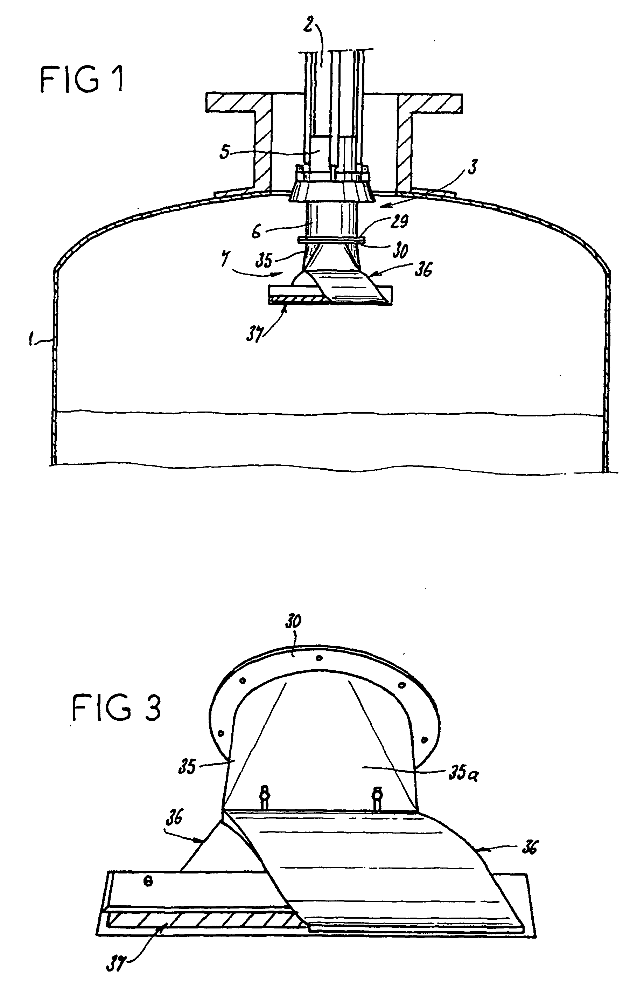

La figure 1 représente un réacteur utilisé dans le domaine de l'industrie pétrochimique pour traiter des fluides, ce traitement étant réalisé par passage de ces fluides au travers d'un lit de matériau catalyseur contenu dans la cuve cylindrique 1 de ce réacteur.

Ce matériau catalyseur se présente sous forme de bâtonnets de quelques millimètres de longueur et est acheminé dans la cuve 1 par un conduit 2.

Un dispositif de dispersion 3 est placé à la sortie du conduit 2, pour répartir le matériau catalyseur en un lit plat, homogène et dense.

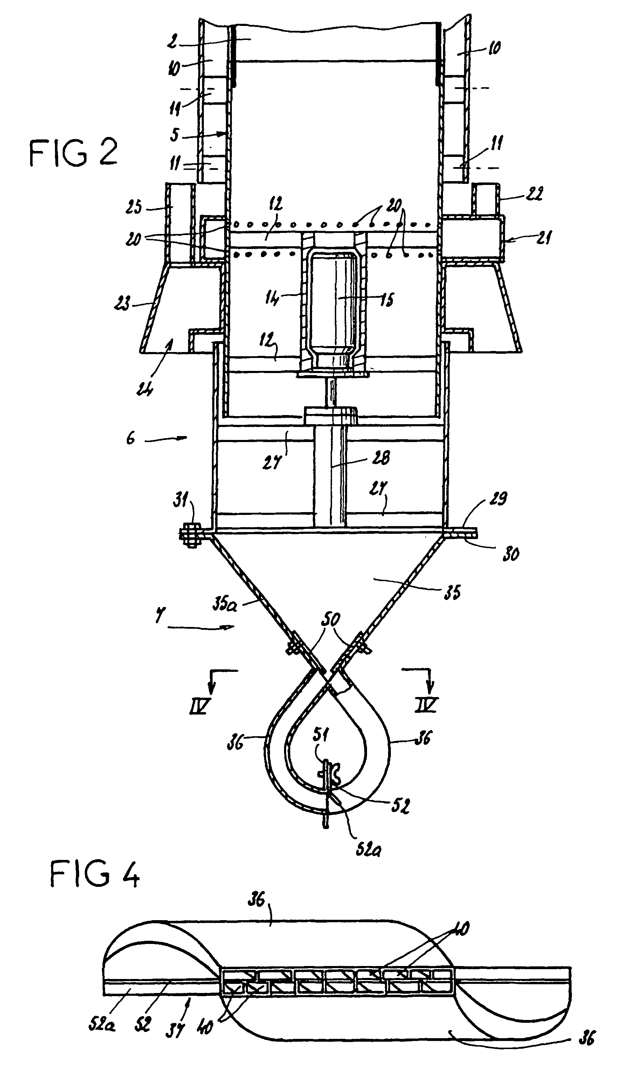

Ainsi que cela apparaît aux figures 1 et 2, ce dispositif 3 comprend une partie tubulaire fixe 5, une partie tubulaire 6, montée rotative par rapport à la partie 5, et un organe de dispersion 7 monté sur l'extrémité inférieure de la partie 6.

La partie 5 est fixée à un bâti (non représenté) au moyen de quatre barres 10 en U se boulonnant sur des plots 11 et est raccordée au conduit 2. Elle comprend intérieurement deux séries de quatre traverses radiales 12 situées à 90° les unes des autres. Ces traverses 12 sont fixées à la paroi de la partie 5 par une de leurs extrémités et sont reliées, par leurs autres extrémités, à un bâti axial 14 supportant un moteur 15 d'entraînement en rotation de la partie 6.

La partie 5 comprend également deux séries de trous 20 aménagés circonférentiellement au travers de sa paroi. Un caisson annulaire 21 est fixé à cette partie 5 en regard de ces trous 20, ce caisson 21 étant relié à une source de vide au moyen d'un flexible (non représenté) engagé sur un embout 22.

Un deuxième caisson annulaire 23 est fixé à la partie 5 en dessous du caisson 21. Ce caisson 23 présente une ouverture annulaire inférieure 24 et est relié à une source de vide au moyen d'un flexible (non représenté) engagé sur un embout 25.

La partie 6 comprend intérieurement deux séries de quatre traverses radiales 27 situées à 90° les unes des autres. Ces traverses 27 sont fixées à la paroi de la partie 6 par une de leurs extrémités et sont reliées, par leurs autres extrémités, à un arbre axial 28 fixé à l'arbre du moteur 15.

Le diamètre de la partie 6 est supérieur à celui de la partie 5, et l'ensemble est conformé de telle sorte que l'extrémité supérieure de la partie 6 vient recouvrir l'extrémité inférieure de la partie 5 lorsque l'arbre 28 est fixé à l'arbre du moteur 15.

L'extrémité inférieure de la partie 6 et l'extrémité supérieure de l'organe 7 comprennent chacune une bride 29, 30 permettant le montage de cet organe 7 sur cette partie 6 au moyens de boulons 31.

L'organe 7 est creux et comprend un conduit primaire 35 se divisant, à sa partie inférieure, en deux conduits secondaires 36.

La figure 3 montre plus particulièrement que le conduit primaire 35 passe d'une ouverture de forme circulaire, à sa partie supérieure, à une ouverture de forme rectangulaire et de section réduite, à sa partie inférieure, de sorte qu'il présente deux parois opposées 35a qui s'aplanissent progressivement en direction de cette partie inférieure.

Chacun des conduits secondaires 36 présente une forme courbe, sensiblement en demi-spire d'hélicoïde, et se termine par une ouverture 37 d'écoulement du matériau dans la cuve 1. Les demi-spires s'enroulent autour d'un même axe horizontal et sont consécutives dans l'espace, de telle sorte que les ouvertures 37 sont situées chacune d'un côté de l'axe de rotation de l'organe 7, dans un même plan diamétral, et sont orientées selon des directions opposées.

Les figures 3 et 4 montrent que chacun des conduits 36 comprend intérieurement sept cloisons longitudinales 40 qui s'étendent sur l'ensemble de sa longueur. L'entraxe entre deux cloisons 40 adjacentes augmente depuis la partie de chaque ouverture 37 située du côté de l'axe de rotation de l'organe 7 vers la partie de cette même ouverture 37 située du côté opposé. Dans l'exemple représenté, pour une largeur totale de chaque conduit 36 de 300 mm et une hauteur de l'ordre de 20 mm, l'écart entre la paroi latérale du conduit 36 et la cloison 40 adjacente située le plus près de l'axe de rotation de l'organe 7 est de 30 mm, puis, en s'éloignant de cet axe de rotation, les écarts entre deux cloisons 40 adjacentes sont respectivement de 30 mm, 35 mm, 35 mm, 40 mm, 40 mm et 45 mm, et l'écart entre la paroi latérale du conduit 36 et la cloison 40 adjacente située le plus à l'extérieur est de 45 mm.

En outre, les deux parois 35a comprennent des plaquettes 50 réglables en position selon une direction perpendiculaire aux bords longitudinaux de l'ouverture inférieure du conduit 35, ces plaquettes 50 permettant d'augmenter ou de diminuer la section du passage du matériau catalyseur dans les conduits 36. Le réglage en position de ces plaquettes 50 est réalisé au moyen de lumières aménagées dans les parois 35a, de tiges filetées solidaires des plaquettes 50, traversant ces lumières, et d'écrous vissés sur ces tiges filetées pour permettre, selon qu'ils sont serrés ou desserrés, d'interdire ou d'autoriser le déplacement des plaquettes. Les plaquettes 50 recouvrent lesdites lumières quelle que soit leur position, de sorte qu'aucun écoulement ne se produit au travers de ces lumières.

Les conduits 36 comprennent, quant à eux, des parois verticales 51 placées sensiblement dans le plan de leurs ouvertures 37, le long desquelles des plaquettes 52 réglables en position sont déplaçables selon une direction parallèle au plan de ces ouvertures 37. Le réglage en position des plaquettes 52 est réalisé de la même manière que précité, au moyen de lumières aménagées dans les parois 51, de tiges filetées solidaires de ces plaquettes 52, traversant ces lumières, et d'écrous vissés sur ces tiges filetées pour permettre, selon qu'ils sont serrés ou desserrés, d'interdire ou d'autoriser le déplacement des plaquettes 52. Ces dernières comportent des bords inclinés 52a propres à légèrement dévier le flux de matériau catalyseur dans le plan vertical, si nécessaire en fonction du type de matériau.

En pratique, l'entraînement en rotation de l'organe 7 permet, grâce aux conduits 36, une projection du matériau catalyseur selon deux flux hélicoïdaux de direction opposée, dont la largeur correspond sensiblement au rayon de la cuve 2.

Pour un organe 7 situé à environ quatre mètres du fond de la cuve 2 et une cuve d'environ trois mètres de diamètre, la vitesse de rotation de l'organe 7 sera d'environ 90 tours par minute. Cette vitesse doit augmenter de 10 à 12 % quand le niveau du matériau catalyseur s'élève d'un mètre.

Les cloisons 40 permettent de diviser le flux de matériau et de répartir son écoulement, à l'encontre de la force centrifuge, sur une large partie ou sur l'ensemble des ouvertures 37.

Les conduits 36 éliminent en outre tout choc du matériau lors de son écoulement.

Les plaquettes 50, 52 permettent d'augmenter ou de diminuer la section de ces conduits 36 pour réguler l'écoulement du matériau catalyseur, si besoin est.

Les caissons 21, 23 permettent, quant à eux, de collecter les poussières du matériau catalyseur, tant à l'intérieur de la cuve 2 qu'à l'intérieur de la partie 5.

## Revendications

1. Dispositif de dispersion d'un matériau solide divisé, notamment sous forme de granules ou de bâtonnets, à l'intérieur d'un récipient tel qu'une cuve (1), comprenant un organe (7) entraîné en rotation autour d'un axe vertical, placé à la sortie du conduit (2) d'introduction du matériau solide divisé dans le récipient, dispositif **caractérisé en ce que** l'organe (7) comprend deux conduits (36) de dispersion du matériau, présentant chacun une forme courbe et une ouverture (37) d'écoulement du matériau dans le récipient ; ces conduits (36) sont courbés autour d'un même axe perpendiculaire à l'axe de rotation dudit organe de dispersion (7) mais de manière opposée l'un par rapport à l'autre, et sont conformés de telle sorte que leurs ouvertures d'écoulement (37) sont situées chacune d'un côté de l'axe de rotation dudit organe de dispersion (7), sensiblement dans un même plan diamétral, et sont orientées selon des directions opposées ; chacun de ces conduits (36) comprend en outre au moins une cloison longitudinale (40) s'étendant sur l'ensemble ou sur une large partie de sa longueur, cette cloison (40) étant propre à diviser le flux de matériau et à répartir l'écoulement de celui-ci, à l'encontre de la force centrifuge, sur l'ensemble ou sur une large partie de l'ouverture d'écoulement (37).

2. Dispositif selon la revendication 1, **caractérisé en ce qu'**il comprend des moyens pour régler la vitesse de rotation de l'organe de dispersion (7) en fonction du type de matériau, de la vitesse d'écoulement de celui-ci et de la distance séparant cet organe et le fond du récipient ou la surface du matériau.

3. Dispositif selon la revendication 1 ou la revendication 2, **caractérisé en ce que** la section des conduits (36) est relativement réduite de telle sorte que les deux flux hélicoïdaux de matériau s'écoulant des ouvertures (37) répandent, à chaque rotation dudit organe (7), une quantité relativement limitée de ce matériau, et **en ce que** la vitesse de rotation dudit organe (7) est, en contrepartie, relativement élevée.

4. Dispositif selon la revendication 3, **caractérisé en ce que** la largeur totale de chaque conduit 36 est de 300 mm et la hauteur de celui-ci est de l'ordre de 20 mm.

5. Dispositif selon l'une des revendications 1 à 4, **caractérisé en ce que** l'entraxe entre deux cloisons (40) adjacentes augmente depuis la partie de chaque ouverture (37) située du côté de l'axe de rotation de l'organe de dispersion (7) vers la partie de cette même ouverture (37) située du côté opposé.

6. Dispositif selon la revendication 5, **caractérisé en ce que**, pour une largeur totale de chaque conduit (36) de 300 mm et une hauteur de l'ordre de 20 mm, l'écart entre la paroi latérale du conduit (36) et la cloison (40) adjacente située le plus près de l'axe de rotation de l'organe (7) est de 30 mm, puis, en s'éloignant de cet axe de rotation, les écarts entre deux cloisons (40) adjacentes sont respectivement de 30 mm, 35 mm, 35 mm, 40 mm, 40 mm et 45 mm, et l'écart entre la paroi latérale du conduit (36) et la cloison (40) adjacente située le plus à l'extérieur est de 45 mm.

7. Dispositif selon l'une des revendications 1 à 6, **caractérisé en ce que** chaque conduit (36) présente une forme sensiblement en demi-spire d'hélicoïde.

8. Dispositif selon l'une des revendications 1 à 7, **caractérisé en ce que** l'organe de dispersion (7) comprend des moyens réglables (50, 52) permettant de réguler l'écoulement du matériau, situés au niveau des conduits (36) de manière à augmenter ou à diminuer la section de ces conduits (36), ou situés en regard des ouvertures (37) de ces conduits (36).

9. Dispositif selon la revendication 8, **caractérisé en ce que** lesdits moyens réglables comprennent des plaquettes (52) situées en regard des ouvertures (37) des conduits (36) comportant des bords inclinés (52a) propres à légèrement dévier le flux de matériau dans le plan vertical.

10. Dispositif selon l'une des revendications 1 à 9, **caractérisé en ce qu'**il comprend un système (20 à 25) d'aspiration des poussières du matériau solide divisé, agissant à l'intérieur du récipient à remplir et/ou à l'intérieur du dispositif lui-même.

## Claims

1. A device for dispersing a divided solid material, in particular in the form of granules or pellets, inside a receptacle such as a tank (1), comprising a member (7) driven rotationally about a vertical axis, positioned at the outlet of the duct (2) for introducing the divided solid material into the receptacle, said device being **characterised in that** the member (7) comprises two ducts (36) for dispersing the material, each having a curved shape and an opening (37) through which the material flows into the receptacle; these ducts (36) are curved about one and the same axis perpendicular to the axis of rotation of said dispersion member (7) but opposed relative to one another, and are shaped in such a way that their flow openings (37) are situated each on one side of the axis of rotation of said dispersion member (7), substantially in one and the same diametral plane, and are oriented in opposing directions; each of these ducts (36) additionally comprises at least one longitudinal partition (40) extending over all or a large part of the length thereof, said partition (40) being suitable for dividing the material stream and distributing the flow thereof, counter to the centrifugal force, over all or a large part of the flow opening (37).

2. A device according to claim 1, **characterised in that** it comprises means for adjusting the speed of rotation of the dispersion member (7) as a function of the type of material, the flow rate thereof and the distance separating said member from the bottom of the receptacle or the surface of the material.

3. A device according to claim 1 or claim 2, **characterised in that** the section of the ducts (36) is relatively small, in such a way that, with each rotation of said member (7), the two helical streams of material flowing out of the openings (37) distribute a relatively limited quantity of said material, and **in that**, by way of compensation, the speed of rotation of said member (7) is relatively high.

4. A device according to claim 3, **characterised in that** the total width of each duct 36 is 300 mm and the height thereof is of the order of 20 mm.

5. A device according to one of claims 1 to 4, **characterised in that** the centre distance between two adjacent partitions (40) increases from the part of each opening (37) situated on the side of the axis of rotation of the dispersion member (7) towards the part of said same opening (37) situated on the opposite side.

6. A device according to claim 5, **characterised in that**, for a total width of each duct (36) of 300 mm and a height of the order of 20 mm, the distance between the side wall of the duct (36) and the adjacent partition (40) situated closest to the axis of rotation of the member (7) is 30 mm, then, moving away from this axis of rotation, the distances between two adjacent partitions (40) are respectively 30 mm, 35 mm, 35 mm, 40 mm, 40 mm and 45 mm, and the distance between the side wall of the duct (36) and the adjacent partition (40) situated furthest to the outside is 45 mm.

7. A device according to one of claims 1 to 6, **characterised in that** each duct (36) exhibits the shape substantially of half a turn of a helix.

8. A device according to one of claims 1 to 7, **characterised in that** the dispersion member (7) comprises adjustable means (50, 52) allowing the flow of material to be regulated, said means (50, 52) being situated at the level of the ducts (36) in such a manner as to increase or decrease the section of said ducts (36), or situated opposite the openings (37) of said ducts (36).

9. A device according to claim 8, **characterised in that** said adjustable means comprise small plates (52) situated opposite the openings (37) of the ducts and comprising inclined edges (52a) suitable for diverting the stream of material slightly in the vertical plane.

10. A device according to one of claims 1 to 9, **characterised in that** it comprises a system (20 to 25) for extracting the dust from the divided solid material, acting inside the receptacle to be filled and/or inside the device itself.

## Patentansprüche

1. Vorrichtung zum Dispergieren eines Schüttguts, insbesondere in der Form von Körnern oder Schnitzeln, im Inneren eines Behälters wie einem Tank (1), mit einer sich in Rotation um eine vertikale Achse bewegenden Einrichtung (7), die bei dem Ausgang der Zutrittsleitung (2) des Schüttguts in den Behälter angeordnet ist, wobei die Vorrichtung **dadurch gekennzeichnet ist, daß** die Einrichtung (7) zwei Leitungen (36) zum Dispergieren des Materials umfaßt, die jeweils eine gebogene Form und eine Öffnung zum Entleeren (37) des Materials in den Behälter aufweisen; wobei diese Leitungen (36) um eine gleiche Achse herum senkrecht zur Rotationsachse der besagten Dispersionseinrichtung (7), jedoch im Verhältnis zueinander auf umgekehrte Weisen gekrümmt sind und derart ausgestaltet sind, daß ihre Öffnungen zum Entleeren (37) sich jeweils an einer Seite der Rotationsachse der Dispersionseinrichtung (7) befinden, im wesentlichen in einer gleichen diametralen Ebene, und nach entgegengesetzten Richtungen orientiert sind; wobei jede dieser Leitungen (36) außerdem mindestens eine längliche Trennwand (40) umfassen, die sich in dem Zusammenbau oder auf einem großen Teil ihrer Länge erstreckt, wobei diese Trennwand (40) zum Trennen des Materialflusses und zum Verteilen der Entleerung, entgegen der Zentrifugalkraft, im Zusammenbau oder auf einem großen Teil der Entleerungsöffnung (37) geeignet ist.

2. Vorrichtung gemäß Anspruch 1, **dadurch gekennzeichnet, daß** sie Mittel zum Steuern der Rotationsgeschwindigkeit der Dispersionseinrichtung (7) je nach der Materialart, der Entleerungsgeschwindigkeit von diesem und dem Abstand, der diese Einrichtung und den Boden des Behälters oder die Oberfläche des Materials trennt, umfaßt.

3. Vorrichtung gemäß Anspruch 1 oder Anspruch 2, **dadurch gekennzeichnet, daß** der Querschnitt der Leitungen (36) relativ reduziert ist, derart, daß die zwei schraubenartigen Materialflüsse, die sich aus den Öffnungen (37) entleeren, bei jeder Rotation der Einrichtung (7) eine relativ begrenzte Menge des Materials verschütten, und daß die Rotationsgeschwindigkeit der Einrichtung (7) im Gegensatz dazu relativ erhöht ist.

4. Vorrichtung gemäß Anspruch 3, **dadurch gekennzeichnet, daß** die Gesamtbreite jeder Leitung (36) 300mm ist und die Höhe dieser in der Größenordnung von 20mm liegt.

5. Vorrichtung gemäß einem der Ansprüche 1 bis 4, **dadurch gekennzeichnet, daß** der Mittenabstand zwischen zwei nebeneinander liegenden Trennwänden (40) von dem Teil jeder Öffnung (37), die sich an der Seite der Rotationsachse der Dispersionseinrichtung (7) befindet, zu dem Teil der gleichen Öffnung (37) hin, die sich bei der gegenüberliegenden Seite befindet, ansteigt.

6. Vorrichtung gemäß Anspruch 5, **dadurch gekennzeichnet, daß** bei einer Gesamtbreite jeder Leitung (36) von 300mm und einer Höhe in der Größenordnung von 20mm der Abstand zwischen der Seitenwand der Leitung (36) und der benachbarten Trennwand (40), die sich am nächsten bei der Rotationsachse der Vorrichtung (7) befindet, 30mm beträgt, dann, sich weiter von der Rotationsachse entfernend, die Abstände zwischen zwei benachbarten Trennwänden (40) jeweils 30mm, 35mm, 35mm, 40mm, 40mm und 45mm betragen, und der Abstand zwischen der Seitenwand der Leitung (36) und der benachbarten Trennwand (40), die sich am weitesten außen befindet, 45mm beträgt.

7. Vorrichtung gemäß einem der Ansprüche 1 bis 6, **dadurch gekennzeichnet, daß** jede Leitung (36) im wesentlichen eine Form einer halben Schraubenwindung aufweist.

8. Vorrichtung gemäß einem der Ansprüche 1 bis 7, **dadurch gekennzeichnet, daß** die Dispersionseinrichtung (7) steuerbarer Mittel (50, 52) umfaßt, die es erlauben, das Entleeren des Materials zu steuern, wobei sich diese auf der Höhe der Leitungen (36) derart befinden, daß der Querschnitt dieser Leitungen (36) vergrößert oder verkleinert wird, oder sich in Bezug auf die Öffnungen (37) der Leitungen (36) befinden.

9. Vorrichtung gemäß Anspruch 8, **dadurch gekennzeichnet, daß** die steuerbaren Mittel Plättchen (52) umfassen, die sich in Bezug auf die Öffnungen (37) der Leitungen (36) befinden, geneigte Kanten (52a) umfassend, die dazu geeignet sind, den Materialfluß in der vertikalen Ebene leicht abzulenken.

10. Vorrichtung gemäß einem der Ansprüche 1 bis 9, **dadurch gekennzeichnet, daß** sie ein System (20 bis 25) zum Ansaugen von Staub des Schüttguts umfaßt, das im Inneren des Füllbehälters und/oder im Inneren der Vorrichtung selbst wirksam ist.
